# EUROPÄISCHE PATENTSCHRIFT

(11) **EP 1 624 547 B1**
(45) Veröffentlichungstag und Bekanntmachung des Hinweises auf die Patenterteilung: **01.11.2017**
(21) Anmeldenummer: 05014280.1
(22) Anmeldetag: 30.06.2005
(51) Int. Cl.: H02H 3/04, H02H 9/02, H04L 12/10

(54) **Modulartige Anschlussvorrichtung in einem Bussystem zum Schutz eines elektrischen Verbrauchers**
Modular connecting device in a bus system for protecting an electrical load
Dispositif de raccordement modulaire dans un système de bus pour protection d'une charge électrique

(30) Priorität: 04.08.2004 DE 102004037924
(43) Veröffentlichungstag der Anmeldung: 08.02.2006
(73) Patentinhaber: Weidmüller Interface GmbH & Co. KG, 32758 Detmold (DE); Endress+Hauser Process Solutions AG, 4153 Reinach (CH)
(72) Erfinder: Korsten, Klaus, 79585 Steinen (DE); Tepper, Christian, 79576 Weil am Rhein (DE); Müller, Matthias, 32791 Lage (DE); Buschkamp, Michael, 32791 Lage (DE)
(74) Vertreter: Specht, Peter

(56) Entgegenhaltungen:
- EP-A- 1 190 403
- DE-A1- 19 923 569
- US-A1- 2001 022 714
- US-A1- 2002 191 553
- US-A1- 2003 131 293

## Beschreibung

Die Erfindung betrifft eine modulartige Anschlußvorrichtung zum Anschluss eines Verbrauchers an ein Bussystem, die einem Segmentkoppler - einer Verbindungseinrichtung - des Bussystems nachgeschaltet ist und zumindest eine Strombegrenzungseinrichtung für den zum angeschlossenen Verbraucher fließenden Strom aufweist.

Bei einem modulartigen Bussystem der Automatisierungstechnik werden üblicherweise mehrere Verbraucher über eine Anschlußvorrichtung jeweils einem bestimmten Segment zugeordnet, die wiederum jeweils über einen Segmentkoppler an den Bus angeschlossen sind, die wiederum mit einem Leitstand - einer übergeordnete Steuerungseinheit - verbunden sind.

Das Busssystem kann mittels Leitungen oder drahtlos aufgebaut sein, wobei im letzteren Fall den Anschlußvorrichtungen Versorgungsspannung nicht vom Segmentkoppler zugeführt wird sondern z.B. von einer anderen Versorgungsquelle und die Ansteuerung der Anschlußvorrichtung drahltlose z.B. über Funk erzeugt. Dabei erfolgt in der Segmentkoppeleinrichtung vorzugsweise eine erste Strombegrenzung für das gesamte Segment. Bei einem im Segment auftretenden Fehlerfall, zum Beispiel ein Kurzschluss, wird das Segment von der Segmentkoppeleinrichtung vom Bus getrennt, beziehungsweise der Strom zu den Verbrauchern begrenzt.

Da derart das ganze Segment ausfällt, ist es auch bekannt, den einzelnen Anschlussvorrichtungen jeweils eine weitere eigene Strombegrenzungseinrichtung zuzuordnen. Nach einer Erkenntnis der Erfindung ist daran nachteilig, dass beim Ansprechen dieser Vorrichtung zwar die weiteren Verbraucher des Segmentes nicht mit abgeschaltet werden, dass es aber nicht möglich ist, den fehlerhaften Verbraucher unter der Vielzahl der Verbraucher schnell und einfach zu identifizieren.

In der DE 100 47 114 C1 ist eine Schutzschaltung zur Spannungsbegrenzung für eine zu schützende Einrichtung beschrieben. Die zu schützende Einrichtung ist mittels eines Schaltelements abtrennbar ausgelegt. Diese wird von einer Mikroeinrichtung in Gestalt eines elektronischen Schalters oder u.U. Relais mit einer Steuerschaltung ausgerührt, die eine Spannungsfühlereinrichtung aufweist. Der Schalter trennt das zu schützende Element galvanisch ab. Als weiteres Beispiel sei WO 00/62394 genannt, die eine Sicherheitsbarriere zum Begrenzen von Strom und Spannung beschreibt. Strombegrenzungen können vor Ort an der jeweiligen Anschlußvorrichtung manuell eingestellt werden. Eine andere Anschlussvorrichtung für ein Bussystem ist aus US 2003 / 131293 bekannt.

Die Erfindung hat die Aufgabe, die gattungsgemäße Anschlußvorrichtung so weiterzu-entwickeln, dass das Erkennen und die Behandlung von Fehlerfällen vereinfacht wird.

Die Lösung der Aufgabe erfolgt durch den Gegenstand des Anspruchs 1.

Vorteilhafte Ausgestaltungen sind den Unteransprüchen zu entnehmen.

Die Erfindung versieht die Anschlußvorrichtung mit einer Datenübertragungseinrichtung, die mit einer dem Segmentkoppler vorgeschalteten, übergeordnete Steuerungseinheit - einem Leitstand - über das Bussystem in Wirkverbindung steht und zumindest zur Übertragung einer Zustandsinformation über den Zustand der Strombegrenzungseinrichtung an die Steuerungseinheit ausgelegt ist.

Die Anschlußvorrichtung bzw. deren Übertragungsvorrichtung kann mit Leitstand und/&oder dem Segmentkoppler über Leitungen oder drahtlos verschaltet bzw. verbunden sind.

Das Wort Segmentkoppler - eine Verbindungseinrichtung - ist dabei nicht einschränkend allein im Sprachgebrauch des Profibusstandards zu verstehen. Hierunter wird vielmehr auch eine sogenannte "Link Device" im Fieldbus Foundation Sprachgebrauch verstanden.

Durch die Erfindung kann am Leitstand zumindest ein Fehlerzustand angezeigt werden, so dass eine leichte Identifikation des fehlerhaften Verbrauchers mittels Fernerkennung erfolgen kann. Hierdurch kann auf einfache Weise ein Ausfall identifiziert und das Abschalten des gesamten Segments vermieden werden.

Vorzugsweise weist die Anschlußvorrichtung selbst ferner eine z.B. optische Anzeigeeinrichtung auf, die zumindest zum Anzeigen eines Überstromfalles an der Anschlußvorrichtung dient.

Nach der vorliegenden Erfindung ist die Datenübertragungseinrichtung mit einem Stromfühler und/oder einem Spannungsfühler zum Abtasten eines Strom- und/oder Spannungszustands in der Anschlußvorrichtung verbunden und weist eine Datenerzeugungseinheit zur Erzeugung von Übertragungsdaten anhand von Messdaten des Stromfühlers und/oder des Spannungsfühlers zur Übertragung an die übergeordnete Steuerungseinheit auf, so dass auch die vor Ort vorherrschenden Strom- und/oder Spannungszustände für eine vorteilhafte Ferndiagnose verwendet werden. Durch die Übertragung dieser Informationen des fehlerhaften Verbrauchers wird eine besonders gute Ferndiagnose, wodurch eine gezielte Fehlerbehebung vorbereitet und durchgeführt werden kann.

In einer weiteren bevorzugten Ausführung der vorliegenden Erfindung sind mit dem Stromfühler in Zusammenwirkung stehende Widerstände in einen Stromweg des Verbrauchers einschaltbar ausgebildet. Dies ermöglicht eine vorteilhafte Anpassung an unterschiedliche Verbraucher und erweitert somit den Einsatzbereich der erfindungsgemäßen Anschlußvorrichtung, wobei es bevorzugt ist, dass die Widerstände mittels eines einstellbaren Kontakts in den Stromweg des Verbrauchers einschaltbar ausgebildet sind.

Der einstellbare Kontakt ist in einer weiteren Ausgestaltung manuell und/oder von der Steuerungseinheit über eine Stelleinrichtung der Datenübertragungseinrichtung einstellbar ausgebildet. Dadurch ist eine vorteilhafte vorbeugende Wartung und somit eine Erhöhung der Betriebssicherheit der Anlage, in der die Anschlußvorrichtung eingebaut ist, ermöglicht und eine frühzeitige Erkennung von fehlerhaften Verbrauchern möglich.

Eine weitere Ausgestaltung der erfindungsgemäßen Anschlußvorrichtung sieht vor, dass die Schalteinrichtung ein Teil der Strombegrenzungseinrichtung zur Unterbrechung des Stroms des Verbrauchers und/oder zur Begrenzung des Stroms des Verbrauchers ist.

Die Erfindung wird nun mit Bezug auf die beigefügte Zeichnung anhand eines Ausführungsbeispiels erläutert. Hierbei zeigt:
- Figur 1: ein Blockschaltbild eines Segments eines Bussystems;
- Figur 2: ein Blockschaltbild einer erfindungsgemäßen Anschlußvorrichtung; und
- Figur 3: ein detaillierteres Schaltbeispiel der erfindungsgemäßen Anschlußvorrichtung nach Figur 2.

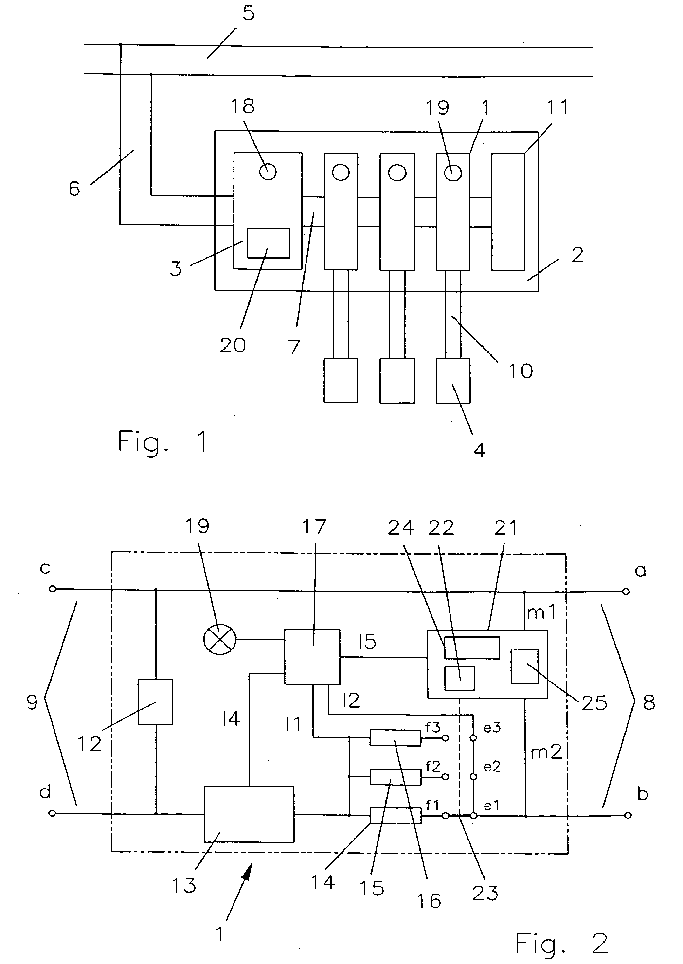

Figur 1 zeigt ein Blockschaltbild eines so genannten Segments 2 eines Zweileitungs-Bussystems mit Busleitungen 5. Die Busleitungen 5 übertragen elektrische Leistung und Daten von einer nicht dargestellten übergeordnete Steuerungseinheit - einem Leitstand - an Segmente 2, von denen hier nur eines beispielhaft dargestellt ist, die die elektrische Leistung und Informationen wiederum über Anschlussvorrichtungen 1 auf elektrische Verbraucher 4 (Slaves) aufteilen, die auch als Feldgeräte bezeichnet werden.

Die Verbraucher 4 sind über eine Anschlussleitung 10 an die Vorrichtungen 1 angeschlossen, die wiederum untereinander mit einem Segmentbus 7 verbunden sind. Der Segmentbus 7 verbindet die Vorrichtungen 1 auf der einen Seite mit einer Segmentkoppeleinrichtung 3 und auf der anderen Seite mit einem so genannten Busabschlusselement 11.

Die Segmentkoppeleinrichtung 3 ist mit den Busleitungen 5 über Busanschlussleitungen 6 verbunden. Sie weist eine erste Strombegrenzungseinrichtung 20 auf, die den in das Segment 2 fließenden Strom bei einem Fehlerfall, zum Beispiel Kurzschluss eines Verbrauchers 4, begrenzt beziehungsweise eine Abschaltung vornimmt und mit einer ersten Segmentanzeigeeinrichtung 18 einen fehlerhaftes Segment 2 anzeigt. Diese Anzeige kann auch mit einer Information gekoppelt sein, die zur nicht dargestellten Steuerungseinheit über das Bussystem übertragen wird. Derart kann auf diese Weise im Fehlerfall eines Verbrauchers 4 das Segment 2 identifiziert werden, in welchem sich der fehlerhafte Verbraucher 4 befindet.

Figur 2 zeigt ein Blockschaltbild einer modulartigen Anschlussvorrichtung für die Verbraucher, die z.B. klemmenartig auf eine Tragschiene aufrastbar ist, wobei auf der Tragschiene vorzugsweise der Segmentkoppler und eine diesem nachgeschaltete Reihung aus den Vorrichtungen - auch in verschiedener Ausgestaltung bzw. mit verschiedenem Funktionsumfang - angereiht ist.

Die Vorrichtung 1 ist mit Anschlüssen a und b versehen, die einen Vorrichtungsanschluss 8ausbilden, der mit dem Segmentbus 7 verbunden ist. Die 1 Vorrichtung weist ferner einen Verbraucheranschluss 9 mit Anschlüssen c und d zum Anschluss des Verbrauchers 4 auf.

Der Anschluss b ist vorzugsweise mit einem Anschluss e1 eines verstellbaren Kontakts 23 verbunden, dessen anderer Anschluss f1 mit einem ersten Anschluss eines ersten Widerstands 14 verbunden ist, wobei dessen anderer Anschluss an einen ersten Anschluss einer Schalteinrichtung 13 als Element einer weiteren Strombegrenzungseinrichtung angeschlossen ist. Die Schalteinrichtung 13 wiederum ist mit ihrem anderen Anschluss mit dem Anschluss d verbunden. Ein in den am Verbraucheranschluss 9 angeschlossenen Verbraucher 4 fließender Strom fließt in dem hier gezeigten Ausführungsbeispiel somit auch, unabhängig von seiner Richtung, durch den Kontakt 23, den ersten Widerstand 14 und die Schalteinrichtung 13.

Der Kontakt 23 ist verstellbar ausgebildet und verbindet in dem hier gezeigten Beispiel in einer weiteren Stellung seinen Kontaktanschluss e2 mit einem dazu korrespondierenden Kontaktanschluss f2 und in einer noch weiteren Stellung seinen Kontaktanschluss e3 mit einem dazu korrespondierenden Kontaktanschluss f3. Die Kontaktanschlüsse e1, e2 und e3 sind untereinander und mit dem Anschluss b des Vorrichtungsanschlusses 8 verbunden. Der Kontaktanschluss f2 ist mit einem zweiten Widerstand 15 und der Kontaktanschluss f3 mit einem dritten Widerstand 16 elektrisch verbunden, wobei die Widerstände 14, 15 und 16 mit ihrem anderen Anschluss jeweils untereinander und mit der Schalteinrichtung 13 verbunden sind.

Der verstellbare Kontakt 23 ermöglicht durch seine oben angegebenen verschiedenen Stellungen, dass die Widerstände 14, 15 und 16 mit beispielsweise unterschiedlich großen Widerstandswerten in den Stromweg des Verbraucherstroms vom Anschluss b zum Anschluss d eingebracht werden können, wodurch eine vorteilhaft große Anpassungsfähigkeit der Vorrichtung 1 an unterschiedliche Verbraucher 4 realisiert wird. Die Verstellbarkeit des Kontakts 23 wird weiter unten noch näher erläutert.

Der durch den jeweils in den Stromweg eingeschaltete Widerstand 14, 15 oder 16 fließende Verbraucherstrom erzeugt an dem Widerstand 14, 15 oder 16 einen Spannungsabfall. Dieser Spannungsabfall ist an den Anschlüssen des jeweiligen Widerstands 14, 15 oder 16 abtastbar. Eine solche Spannungsabtastung zur Ermittlung des Verbraucherstroms wird von einem in der Vorrichtung 1 angeordneten Stromfühler 17 durchgeführt. Er ist mit seinen hierfür vorgesehenen Anschlüssen 11 und 12 jeweils mit den gemeinsamen Anschlüssen der Widerstände 14, 15 und 16 und in diesem Beispiel mit den gemeinsamen Kontaktanschlüssen e1, e2 und e3 des Kontakts 23 verbunden.

Der Spannungsabfall wird am jeweiligen in den Stromweg von b nach c durch den Kontakt 23 eingeschalteten jeweiligen Widerstand 14, 15 oder 16 entsprechend erhöht. Der Stromfühlers 17 tastet den durch den Verbraucherstrom am ersten Widerstand 14 erzeugten Spannungsabfall ab und vergleicht ihn mit einem vorgebbaren Schwellwert. Im Falle des Kurzschlussstroms erzeugt der Stromfühler 17 ein Signal, welches eine in der Vorrichtung 1 angeordnete Anzeigeeinrichtung 19 aktiviert, die an seinem Anschluss 13 angeschlossen ist. Hierdurch kann der fehlerhafte Verbraucher 4 in einfacher Weise ermittelt werden, da die Vorrichtung 1, an die er angeschlossen ist, ihn eindeutig identifiziert.

Weiterhin erzeugt der Stromfühlers 17 an seinem Anschluss 14 ein Signal, das der Schalteinrichtung 13 zugeleitet wird und diese beispielsweise ausschaltet, so dass die Verbindungsstrecke vom Anschluss b zum Anschluss d der Vorrichtung 1 für den Verbraucherstrom unterbrochen wird und kein Schaden entsteht. Außerdem wird nur der Verbraucher 4 abgeschaltet, der an diese Vorrichtung 1 angeschlossen ist. Alle anderen Verbraucher 4 (siehe Figur 1) sind davon nicht betroffen.

In diesem Ausführungsbeispiel ist der Stromfühler 17 mit einem Anschluss 15 mit einer in der Vorrichtung 1 angeordneten Datenübertragungseinrichtung 21 verbunden, an die über diesen Anschluss 15 das Fehlersignal oder ein zu dem Verbraucherstrom proportionales Signal geleitet wird. Die Datenübertragungseinrichtung 21 ist über Anschlüsse m1 und m2 mit dem Vorrichtungsanschluss 8 und daher mit den Busleitungen 5, wie oben erläutert, verbunden. Sie erzeugt mit dem Fehlersignal des Stromfühlers 17 und/oder mit dem zum Verbraucherstrom proportionalen Signal mittels einer Datenerzeugungseinheit 24 Daten zur Übertragung mittels bekannter Übertragungstechnik über den Bus an die übergeordnete Steuerungseinheit.

Weiterhin weist die Datenübertragungseinrichtung 21 optional einen Spannungsfühler 25 auf, der über die Anschlüsse m1 und m2 die elektrische Spannung an den Anschlüssen a und b abtastet. Es können auch weitere Anschlüsse an anderen Stellen, beispielsweise an den Anschlüssen c und d vorhanden sein. Auch die vom Spannungsfühler 25 abgetastete Spannung kann von der Datenübertragungseinrichtung 21 in oben erwähnter Weise über den Bus an die Übergeordnete Steuerungseinheit übertragen werden.

Die Datenübertragungseinrichtung 21 besitzt außerdem eine Stelleinrichtung 22 für den Kontakt 23. Dabei ist die Stelleinrichtung 22 beispielsweise als ein bekannter elektronischer Schalter ausgebildet, der je nach Ansteuerung in bekannter Weise einen der Widerstände 14, 15 oder 16 in den Stromweg schaltet. Die Stelleinrichtung 22 kann an der Vorrichtung 1 beispielsweise von Hand mittels nicht dargestellter Schaltelemente eingestellt werden.

Vorzugsweise erfolgt die Einstellung des Kontakts 23 von der übergeordneten Steuerungseinheit durch Übertragung von entsprechenden Signalen über den Bus, die von der Datenübertragungseinrichtung 21 empfangen und in Ansteuersignale für die Stelleinrichtung 22 umgesetzt werden. Somit ist es von der - übergeordneten Steuerungseinheit, dem Leitstand - in einfacher Weise möglich, die Vorrichtung 1 auf einem gewünschten Widerstandswert im Stromweg eines Verbrauchers einzustellen.

Die Vorrichtung 1 weist weiterhin optional einen Überspannungsbegrenzer 12 auf, der mit den Anschlüssen c und d des Verbrauchers 4 verbunden ist. Dadurch wird sichergestellt, dass keine Überspannungen und/oder Überspannungsimpulse auf den Verbraucher 4 gelangen können.

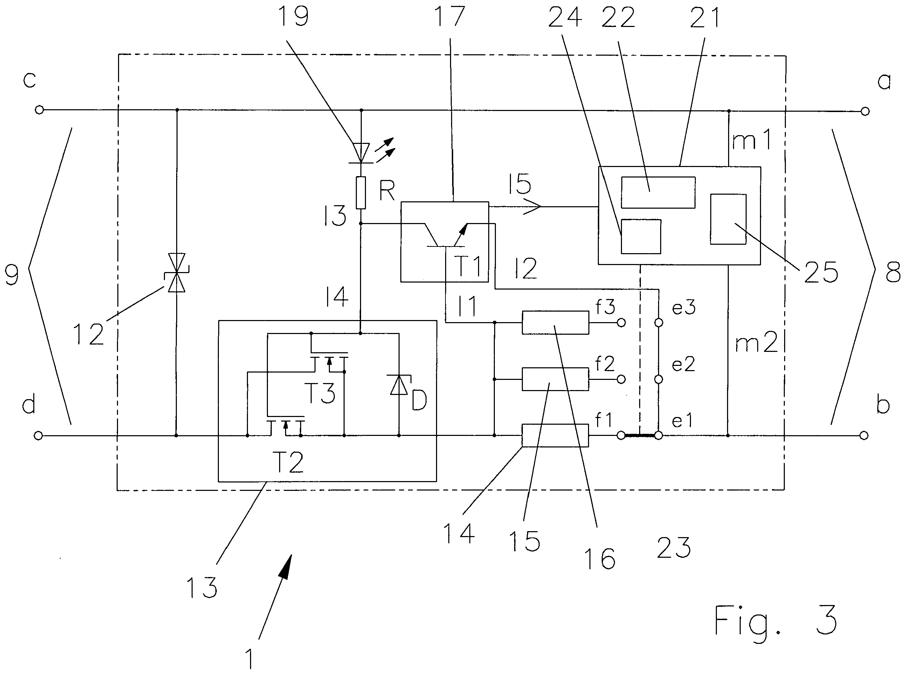

Ein Ausführungsbeispiel der Vorrichtung 1 gemäß Figur 2 ist in Figur 3 dargestellt, wobei der Stromfühler 17 als ein Transistor T1 ausgebildet ist, dessen Basisanschluss als Anschluss 11 an dem gemeinsamen Anschluss der Widerstände 14, 15 und 16, und dessen Emitteranschluss als Anschluss 12 an den verbundenen Anschlüssen e1, e2 und e3 des Kontakts 23 angeschlossen ist. Der Kollektoranschluss des Transistors T1 ist als Anschluss 13 über einen Widerstand R mit der Anzeigeeinrichtung 19 verbunden, die hier als Leuchtdiode (LED) ausgebildet ist und an der Verbindungsleitung der Anschlüsse a und c angeschlossen ist.

Der Kollektor des Transistors T1 ist weiterhin als Anschluss 14 mit der Schalteinrichtung 13 verbunden, die aus zwei Feldeffekttransistoren T2 und T3 sowie einer Diode D in Ausführung einer Zenerdiode zur Spannungsbegrenzung besteht. Beide Gateanschlüsse der Feldeffekttransistoren T2 und T3 sind miteinander, mit der Kathode der Diode D und dem Anschluss 14 und somit mit dem Kollektor des Transistors T1 verbunden. Die Drain- und Sourceanschlüsse der Feldeffekttransistoren T2 und T3 sind jeweils miteinander verbunden, wobei die Drainanschlüsse mit dem Anschluss d und die Sourceanschlüsse mit dem gemeinsamen Anschlusspunkt der Widerstände 14, 15 und 16 in Verbindung stehen.

Wird der Verbraucher 4 im Nennbetrieb, das heißt mit seinem Nennstrom betrieben, so ist der durch diesen Nennstrom am Widerstand 14, 15 oder 16 erzeugte Spannungsabfall zu gering, um den Transistor T1 durchzusteuern, das heißt in den leitenden Zustand zu schalten. Daher besitzt dessen Kollektor in diesem nicht durchgeschalteten Zustand das Potenzial des Anschlusses a über die Anzeigeeinrichtung 19 und den Widerstand R. Dieses Potenzial liegt auch auf den Gateanschlüssen der Feldeffekttransistoren T2 und T3, wodurch diese durchgeschaltet sind und den Verbraucher 4 an dem Anschluss d mit dem Anschluss b über ihre Drain-Source-Strecken und den jeweiligen Widerstand 14, 15 oder 16 verbinden, so dass der Stromweg zum Verbraucher 4 nicht unterbrochen ist.

Bei einem Fehlerstrom erzeugt dieser an dem jeweils eingeschalteten Widerstand 14, 15 oder 16 einen Spannungsabfall, der den Transistor T1 ansteuert, wobei in diesem Beispiel seine Basis-Emitter-Spannung den Vergleichswert in Zusammenhang mit dem jeweiligen Widerstandswert des eingeschalteten Widerstands 14, 15 oder 16 bildet. Der durchgeschaltete Transistor T1 weist in diesem Schaltzustand an seinem Kollektor ein das Potenzial des Anschlusses b auf, wodurch die Leuchtdiode als Anzeigeeinrichtung 19 aufleuchtet.

Dieses zum Anschluss a unterschiedliche Potenzial, in diesem Fall ist es negativ gegenüber dem Potenzial des Anschlusses a, wird auch den Gateanschlüssen der Feldeffekttransistoren T2 und T3 zugeleitet, die daraufhin in den nicht leitenden Zustand geschaltet, das heißt ausgeschaltet, werden und den Stromweg zum Verbraucher 4 unterbrechen. Auch eine Strombegrenzung des Verbraucherstroms ist möglich.

Es ist möglich, dass die Anschlußvorrichtung 1 in einer Ausführung auszubilden (hier nicht dargestellt), bei welcher nur ein erster Widerstand 14 vorhanden ist, beziehungsweise der Kontakt 23 fest eingestellt ist. Hierbei kann die Datenübertragungseinrichtung auch deaktiviert oder nicht vorhanden sein.

Die Stromfühlereinrichtung 17 kann auch so ausgebildet sein, dass sie die abgetastete Spannung mit verschiedenen Schwellwerten vergleicht, um verschiedene Betriebs- und/oder Fehlerzustände des Verbrauchers 4 zu ermitteln.

Zwischen der Segmentkoppeleinrichtung 3 und den Anschlussvorrichtungen 1 kann eine so genannte Ex-Schutzbarriere für eine EXi-Bereich eingebracht sein, wobei diese Barriere den explosionsgeschützten Bereich (EXE) von dem so genannten eigensicheren explosionsgeschützten Bereich (EXi) trennt. Diese Bereichseinteilung ist bekannt. Über diese Barriere wird die Energie übertragen und ebenfalls die Informationen.

### Bezugszeichen

- 1: Anschlußvorrichtung
- 2: Segment
- 3: Segmentkoppeleinrichtung
- 4: Verbraucher
- 5: Busleitungen
- 6: Busanschlussleitungen
- 7: Segmentbus
- 8: Vorrichtungsanschluss
- 9: Verbraucheranschluss
- 10: Anschlussleitung
- 11: Busabschlusselement
- 12: Überspannungsbegrenzer
- 13: Schalteinrichtung
- 14: Erster Widerstand
- 15: Zweiter Widerstand
- 16: Dritter Widerstand
- 17: Stromfühler
- 18: Segmentanzeigeeinrichtung
- 19: Anzeigeeinrichtung
- 20: Strombegrenzungseinrichtung
- 21: Datenübertragungseinrichtung
- 22: Stelleinrichtung
- 23: Kontakt
- 24: Datenerzeugungseinheit
- 25: Spannungsfühler

- a-b: Eingangsanschlüsse
- c-d: Ausgangsanschlüsse
- e1-e3, f1-f3: Kontaktanschlüsse
- 11-12: Anschlüsse Stromfühlers
- 13: Anschluss Anzeige
- 14: Anschluss Schalteinrichtung
- 15: Anschluss Datenübertragungseinrichtung
- m1-m2: Anschlüsse Spannungsfühler

- D: Diode
- R: Widerstand
- T1-T3: Transistor

## Patentansprüche

1. Modulartige Anschlußvorrichtung (1) zum Anschluss eines Verbrauchers an ein Bussystem, die einem Segmentkoppler - einer Verbindungseinrichtung - des Bussystems nachgeschaltet ist und eine Strombegrenzungseinrichtung für den zum angeschlossenen Verbraucher fließenden Strom aufweist, und mit einer Datenübertragungseinrichtung (21), die mit einer dem Segmentkoppler vorgeschalteten, übergeordnete Steuerungseinheit - einem Leitstand - über das Bussystem in Wirkverbindung steht und zumindest zur Übertragung einer Zustandsinformation über den Zustand der Strombegrenzungseinrichtung an die Steuerungseinheit ausgelegt ist, **dadurch gekennzeichnet, dass** die Datenübertragungseinrichtung (21) mit einem Stromfiihler und/oder einem Spannungsfühler (21) zum Abtasten eines Strom- und/oder Spannungszustands in der Anschlußvorrichtung (1) verbunden ist und eine Datenerzeugungseinheit (24) zur Erzeugung von Übertragungsdaten anhand von Messdaten des Stromfühlers (17) und/oder des Spannungsfühlers (25) zur Übertragung an die übergeordnete Steuerungseinheit aufweist.

2. Anschlußvorrichtung nach Anspruch 1, **dadurch gekennzeichnet, dass** die Anschlußvorrichtung (1) eine Anzeigeeinrichtung (19) aufweist, die zumindest zum Anzeigen eines Überstromfalles an der Anschlußvorrichtung dient.

3. Anschlußvorrichtung (1) nach einem der Ansprüche 1 bis 3, **dadurch gekennzeichnet, dass** mit dem Stromfühler (17) in Zusammenwirkung stehende Widerstände (14, 15, 16) in einen Stromweg des Verbrauchers (4) einschaltbar ausgebildet sind.

4. Anschlußvorrichtung (1) nach einem der vorstehenden Ansprüche, **dadurch gekennzeichnet, dass** die Widerstände (14, 15, 16) mittels eines einstellbaren Kontakts (23) in den Stromweg des Verbrauchers (4) einschaltbar sind.

5. Anschlußvorrichtung (1) nach einem der vorstehenden Ansprüche, **dadurch gekennzeichnet, dass** der einstellbare Kontakt (23) manuell und/oder von der übergeordnete Steuerungseinheit über eine Stelleinrichtung (22) der Datenübertragungseinrichtung (21) einstellbar ausgebildet ist.

6. Anschlußvorrichtung (1) nach einem der vorstehenden Ansprüche, **dadurch gekennzeichnet, dass** die Schalteinrichtung (13) als Teil der Strombegrenzungseinrichtung zur Unterbrechung des Stroms des Verbrauchers (4) und/oder zur Begrenzung des Stroms des Verbrauchers (4) ausgebildet ist.

7. Anschlußvorrichtung (1) nach einem der vorstehenden Ansprüche, **dadurch gekennzeichnet, dass** sie auf eine Tragschiene aufrastbar ist.

## Claims

1. A modular connecting device (1) for connecting a consumer to a bus system, which is connected downstream of a segment coupler - a connecting unit - of the bus system and has a current limiting unit for the current flowing to the connected consumer, and having a data transmission unit (21), which is operationally connected via the bus system to a higher-order control unit - a control station - which is connected upstream of the system coupler, and which data transmission unit is designed at least for transmitting an item of state information about the state of the current limiting unit to the control unit, **characterized in that** the data transmission unit (21) is connected to a current sensor and/or a voltage sensor (21) for sampling a current and/or voltage state in the connecting device (1) and has a data generating unit (24) for generating transmission data on the basis of measurement data of the current sensor (17) and/or the voltage sensor (25) for transmission to the higher-order control unit.

2. The connecting device according to Claim 1, **characterized in that** the connecting device (1) has a display unit (19), which is used at least to display a case of overcurrent at the connecting device.

3. The connecting device (1) according to any one of Claims 1 to 3, **characterized in that** resistors (14, 15, 16), which interact with the current sensor (17), are designed so that they can be activated in a current path of the consumer (4).

4. The connecting device (1) according to any one of the preceding claims, **characterized in that** the resistor (14, 15, 16) can be activated by means of a settable contact (23) in the current path of the consumer (4).

5. The connecting device (1) according to any one of the preceding claims, **characterized in that** the settable contact (23) is designed so it is settable manually and/or by the higher-order control unit via a setting unit (22) of the data transmission unit (21).

6. The connecting device (1) according to any one of the preceding claims, **characterized in that** the switching unit (13) is designed as part of the current limiting unit for interrupting the current of the consumer (4) and/or for limiting the current of the consumer (4).

7. The connecting device (1) according to any one of the preceding claims, **characterized in that** it can be snapped onto a bus bar.

## Revendications

1. Installation de raccordement modulaire (1) pour le raccordement d'un consommateur à un système de bus, montée en aval d'un coupleur de segments (un dispositif de connexion) du système de bus et comprenant un dispositif limiteur d'intensité pour le courant allant vers le consommateur raccordé, et avec un dispositif de transmission de données (21) en liaison active par le système de bus avec une unité de commande (un poste de commande) de rang supérieur monté en amont du coupleur de segments et conçu au moins pour transmettre à l'unité de commande une information d'état sur l'état du limiteur d'intensité, **caractérisé en ce que** le dispositif de transmission de données (21) est connecté à un capteur d'intensité et/ou à un capteur de tension (21) destiné à détecter un état d'intensité ou de tension dans l'installation de raccordement (1) et comporte une unité de génération de données (24) pour la génération de données de transmission à l'aide de données de mesure du capteur d'intensité (17) et/ou du capteur de tension (25) en vue de la transmission à l'unité de commande de rang supérieur.

2. Installation de raccordement selon la revendication 1, **caractérisée en ce que** l'installation de raccordement (1) présente un dispositif d'affichage (19) qui sert au moins à indiquer une situation de surintensité au niveau de l'installation de raccordement.

3. Installation de raccordement (1) selon l'une des revendications 1 à 3, **caractérisée en ce que** des résistances (14, 15, 16) coopérant avec le capteur d'intensité (17) sont formées de façon à pouvoir être activées dans un trajet de courant du consommateur (4).

4. Installation de raccordement (1) selon l'une des revendications précédentes, **caractérisée en ce que** les résistances (14, 15, 16) peuvent être activées au moyen d'un contact réglable (23) dans le trajet de courant du consommateur (4).

5. Installation de raccordement (1) selon l'une des revendications précédentes, **caractérisée en ce que** le contact réglable (23) est conçu pour pouvoir être réglé manuellement et/ou par l'unité de commande de rang supérieur à l'aide d'un dispositif de réglage (22) du dispositif de transmission de données (21).

6. Installation de raccordement (1) selon l'une des revendications précédentes, **caractérisée en ce que** le dispositif de commutation (13) fait partie du dispositif limiteur d'intensité afin de couper le courant du consommateur (4) et/ou de limiter le courant du consommateur (4).

7. Installation de raccordement (1) selon l'une des revendications précédentes, **caractérisée en ce qu'**elle peut être emboîtée sur un rail de support.
